Europäisches Patentamt

(19) European Patent Office (11) Publication number: **0 002 118**

Office européen des brevets **B1**

(12) **EUROPEAN PATENT SPECIFICATION**

(21) Application number: **78300599.4**   (51) Int. Cl.³: **F 16 L 21/02**

(22) Date of filing: **06.11.78**

(54) Sealed sleeve pipe coupling.

(30) Priority: **21.11.77 US 853118**

(43) Date of publication of application:
**30.05.79 Bulletin 79/11**

(45) Publication of the grant of the European patent:
**11.03.81 Bulletin 81/10**

(84) Designated Contracting States:
**BE CH DE FR GB LU NL SE**

(56) References cited:
**DE - A - 2 604 009**
**FR - A - 2 145 075**
**GB - A - 1 372 241**
**US - A - 3 212 799**
**US - A - 3 368 830**
**US - A - 3 938 834**

(73) Proprietor: **W.S. DICKEY CLAY MFG. CO.**
**P.O. Box 6**
**824 East 4th Street Pittsburgh Kansas 66762 (US)**

(72) Inventor: **Thompson, Ernest Robert**
**1710 South College**
**Pittsburgh Kansas 66762 (US)**

(74) Representative: **Allen, William Guy Fairfax et al,**
**J.A. KEMP & CO. 14 South Square Gray's Inn**
**London WC1R 5EU (GB)**

Courier Press, Leamington Spa, England.

Sealed sleeve pipe coupling

The invention relates to a pipe coupling for use with adjacent pipe ends of a particular diameter, said coupling comprising a generally cylindrical sleeve adapted to overlie the adjacent pipe ends and a resilient sealing ring adjacent each end of the cylindrical sleeve for engagement with the exterior surface of the pipe ends.

Pipe sections which are joined together to form a pipeline for the flow of fluids must be free from leakage and, accordingly, considerable care must be taken in selecting a fitting which will properly form a joint between adjacent sections of a pipe and which will securely grip and maintain the pipe in a proper, leakproof relationship. Some known forms of pipe joint designs do not allow attachment at the factor and must be shipped separately. Frequently, the plane ends of the pipes deviate from a perfect roundness, and have variations in circumferential dimensions which will not allow a pipe coupling with a fixed internal dimension to grip the plane end of the pipe.

In an effort to alleviate these problems, plain end pipe couplings have been manufactured of various resilient materials, including polyvinyl chloride, formed to shape, have elastomeric sealing rings at opposite ends of a generally cylindrical sleeve. Typically, these couplings attempt both to secure the pipe against outward movement and to seal the pipe against leakage by the sealing ring. These structures generally perform satisfactorily when installed but generally offer little or no resistance to pulling free or "cocking", that is to say misalignment between the pipes. Moreover, shifting of the pipe commonly causes the pipe surface and the sealing ring to become separated, which obviously leads to possible leakage from the pipe coupling.

DE - A - 2604099 describes a pipe coupling having a rigid tubular body with inturned ends which accommodate sealing rings. A central inwardly extending flange provides an abutment and longitudinal reinforcing ribs extend on each axial side of the flange. This construction does not overcome the problems mentioned above.

United States Patent No. 3,368,830 describes a pipe coupling comprising a generally cylindrical sleeve formed of a semi-elastic synthetic resin material, which is adapted to overlie the adjacent pipe ends, with an inwardly extending integral annular rib in its longitudinal mid-portion, the rib dividing the coupling into two sections, each having an inner portion adjacent the enlarged outer diameter portion in which a resilient sealing ring is located.

While this construction provides some improvement it still does not offer much resistance to pulling free or misalignment of the pipes.

The pipe coupling according to the present invention is of this general type, but includes circumferentially spaced integral projections which extend generally longitudinally of the coupling, project inwardly from the respective inner portions and have inner surfaces located radially inwardly of a cylindrical surface of said particular diameter to grip and support a pipe end of said diameter, the inner portion being deformable to accommodate outward forces applied to the projections as the pipe ends are received therein.

Such a pipe coupling may be used with plain end pipes formed of ceramic, clayware, pitch fibre or asbestos manufacture, such as are used for sewers, drain cable conduit, and the like.

The construction can be made of a plastics material which is inert to soil material and organisms. It is capable of connecting two pipe ends together, and permits the coupling to be connected to one pipe end in the factory shipped to a site for connection to another pipe section.

The annular rib abuts the end portion of the pipe end and thus limits the intrusion of the pipe which is gripped by the circumferentially spaced projections, which are preferably in the form of longitudinal ridges, and which grip the external surface of the pipe end.

This construction allows the coupling to accommodate cocking of the pipe ends and also allows the coupling to provide an adequate connection to a pipe end which deviates slightly from a perfectly round shape.

The construction is durable in use, and also is simple to install.

One way of carrying out the invention is described in detail below with reference to the drawings which illustrate only one specific embodiment.

In the drawings:—

Figure 1 is a side elevation of two pipe ends joined by this embodiment of coupling according to the invention;

Figure 2 is a cross-section through one pipe end, with the coupling in place, and the other pipe end not yet inserted, the cross-section being taken on the line 2—2 of Figure 3;

Figure 3 is a cross-section taken along the line 3—3 of Figure 1;

Figure 4 is a fragmentary enlarged section taken along the line 4—4 of figure 3; and

Figure 5 is an enlarged view of a portion of Figure 2 showing the form of the internal projections.

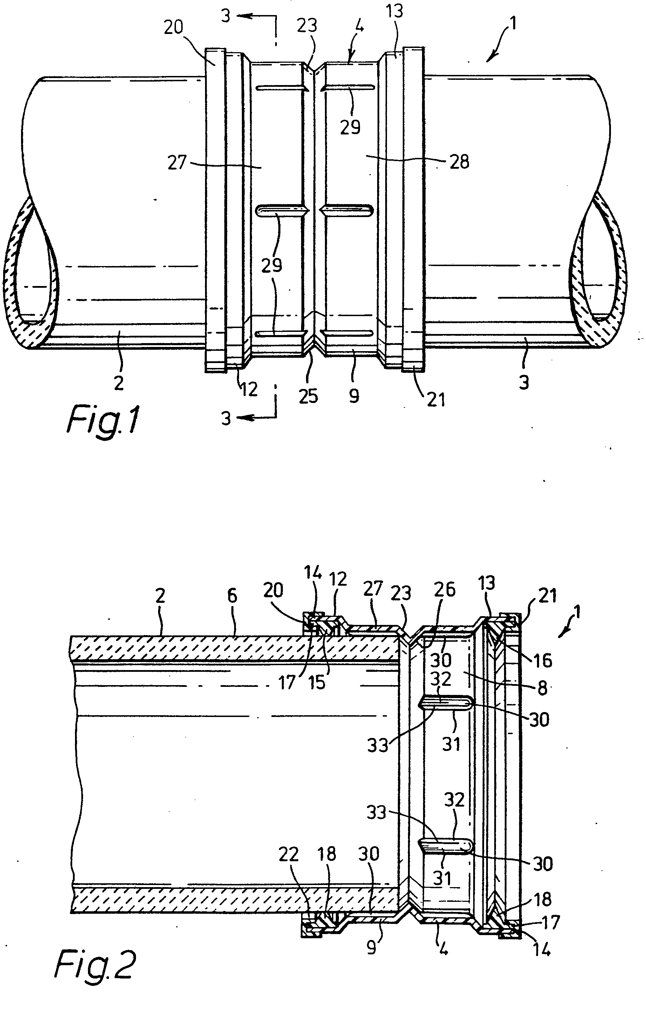

A plain end pipe coupling 1 according to the present invention is shown in Figure 1 connecting together a pair of adjacent ends of plain end pipe section ends 2 and 3. The coupling 1 includes a sleeve member 4 formed of substantially rigid yet semi-elastic material and sized to receive adjacent facing pipe ends 2 and 3. In the illustrated example, the coupling 1 is for connecting aligned pipe sections, although it is within the concept of this invention to employ a modified coupling to form T-connections, angles, and the like. The coupling 1 will remain fluidtight even when a line of pipe deflects during backfilling or settling and normal ground movements thereby to resist leakage from both within and outside the pipe.

The pipe ends 2 and 3 are each spigot and plain ends; that is, they have the same diameter as the body of the pipe and have no bells or enlarged ends or other. special connecting portions. The coupling 1 may be employed in connection with plain end pipes of ceramic, clayware, pitch fibre, asbestos cement, iron or the like. The sleeve portion 4 is commensurately sized to receive the pipe end therein. Although generally cylindrical, some pipe ends may become slightly out of round during manufacture, and particularly during firing operations in the example of ceramic pipes, making effective joining and sealing difficult, if not impossible, with some known plain end couplings. In contrast, the illustrated coupling 1 grips pipe ends slightly deviating from round and can be transported and handled without the fitting coming off the end of the pipe.

In the illustrated embodiment, sleeve member 4 is generally cylindrical and has an interior surface 8 and an exterior surface 9.

The sleeve member 4 has enlarged end portions 12 and 13 receiving sealing rings 15 and 16 therein which interferingly engage with the pipe ends 2 and 2 and compressibly seal thereon for a tight, leak-free fit.

As can be seen from Figure 2, the sealing rings 15 and 16 are preferably of V-shaped cross-section, although other cross-sectional shapes, such as squares, O-rings, or the like may be used in suitable situations. The V-shape is preferred for the illustrated application, because it includes an inwardly extended bead 18, which compresses in an interference engagement with the outer surface 6 of the pipe ends 2 and 3, to form a fluidtight seal. Additionally, the bead 18 permits shifting of the pipe ends 2 and 3 relative to the sleeve member 4 also without allowing leakage. The sealing rings are shown held in annular grooves in the sleeve ends. In the illustrated structure, the sealing rings 15 and 16 are respectively retained in the enlarged end portions 12 and 13 by end caps 20 and 21. In the present example, the end caps 20 and 21 are U-shaped rings having a pair of spaced and parallel wall members 22 forming an opening and inserted over the free end 14 of the respective enlarged end portion 12 or 13 and a projecting portion 17 of the respective sealing ring 15 or 16. The end caps 20 and 21 are secured to the free ends 14 by suitable engagement means, such as engagement lugs (not shown) providing a snap-fit, gluing by suitable cements or solvents, or, in the illustrated example, by spin or heat welding.

The sleeve member 4 includes an inwardly extending annular V-shaped rib 25 protruding inwardly from the longitudinal midportion 23 of the sleeve member. The annular rib 25 divides the sleeve member 4 into two sections. The annular rib 25 is integrally formed with the sleeve member 4 and provides an abutment surface 26 for limiting the extent of intrusion of the pipe end 2 or 3. Accordingly, in the present example, the annular rib 25 is interposed between the pipe ends 2 and 3 and prevents the same from possibly damaging contact with each other. The two sections of the coupling divided off by the annular rib 25 each include an inner portion 27, 28 adjacent the rib 25 and the enlarged diameter portion 12, 13 extending to the end and accommodating the sealing rings 15, 16.

Positioned between the rib 25 and the enlarged end portion 12 and 13, that is within the inner portion 27 and 28, are a plurality of projections extending radially inwardly from the interior surface 8. The projections are shaped as ridges 30.

As illustrated, the ridges 30 are each comprised of a pair of inwardly inclined and converging sides 31 and 32 which extend radially from the interior surface 8. The sides 31 and 32 join at an apex line 33, thereby forming a V-shaped member protruding from and substantially parallel to the axis of the bore of the sleeve member 4. Opposite the ridges 30, the exterior surface 9 has a like plurality of commensurately shaped depressions 29, illustrating, for example, a particular method of forming the ridges 30, as by moulding or compression of mouldable material.

In some circumstances, it may be preferable to orient the ridges 30 slightly helically to the sleeve member 4. In the illustrated example, the ridges 30 are longitudinally oriented and circumferentially spaced around the interior surface 8, forming an hexagonal arrangement. Formed integrally with the sleeve member 4, the ridges 30 are likewise comprised of a rigid, yet semi-elastic, material which securely compressibly grips and supportably engages the pipe end 2 or 3.

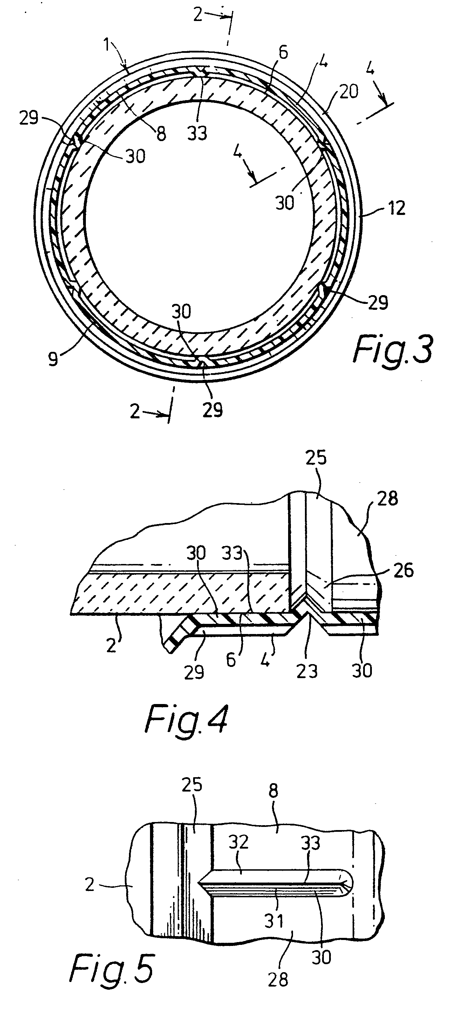

The ridges 30 are sized whereby the inner surfaces are spaced radially outwardly from the axis slightly less than the radius of the outer surface of the pipe end to be received therein. In engagement of the pipe end 2 with the coupling 1, as illustrated in Figures 3 and 4, the interior surface 8 is separated from the surface of the pipe end 2, so the engagement of the pipe end is by the gripping action of the ridges 30 which tend to prevent cocking of the coupling 1 on the pipe end 2. The semi-elastic material of the ridges 30 provides resistable engagement against the surface of the pipe end 2, thereby effecting frictional engagement therewith. The plurality of frictionally engaging ridges 30 arranged circumferentially around the interior of the sleeve member 4 effects supporting engagement and thereby gripping alignment of the coupling 1 relative to the pipe end 2. So supported in alignment, the pipe end 2 does not tend to become cocked or skewed or separated from the sealing ring 15, thereby preventing leakage from the coupling 1.

To effect the proper gripping engagement, the sleeve member 4 is formed of a substantially rigid yet semi-elastic material having sufficient flexibility to permit nominal angular movement of the pipe ends 2 and 3 transverse to the respective axis thereof and bending of the sleeve member 4. A desirable modulus of elasticity for proper flexibility is in the range of $3.468 \times 10^8$ to $138.713 \times 10^8$ N/metre$^2$ (40,000 to 2,000,000 pounds per square inch) and a desired tensile strength for proper rigidity is in the range of $20.6 \times 10^6$ to $55.43 \times 10^6$ N/metre$^2$ (3,000 to 8,000 pounds per square inch). Therefore, the sleeve member 4 is formed of a suitable thermosetting or thermoplastic synthetic resinous material, such a polypropylene, polystyrene, polyvinyl chloride or acrylonitrile-butadiene-styrene (commonly referred to as ABS). Polyvinyl chloride, for example, provides the desired rigidity combined with sufficient tensile strength and flexibility to support the pipe ends 2 and 3 and permit relative movement between the pipe ends 2 and 3 and the sleeve member 4 all without exceeding the strength of said said sleeve member. A desirable thickness for a sleeve member 4 having the above strength requirements to make a joint between pipe sections having a 203 mm (8 inch) nominal interior diameter is approximately 3.18 mm to 6.35 mm ($\frac{1}{8}$ to $\frac{1}{4}$ inch).

It is to be noted that, when formed of suitable semielastic materials, the sleeve member 4 resiliently stretches slightly to accept pipe sections which are slightly out of round. For example, when polyvinyl chloride (PVC) comprises the forming material, the sleeve 4, sized to have a 203 mm (8 inch) nominal interior diameter, will flex up to 12.7 mm ($\frac{1}{2}$ inch) to accept a pipe not perfectly round. In general, the circumference of the pipe end 2 may deviate approximately $\pm 1\%$ (or 2% of the mean) from average circumference and the plain end pipe fitting 1 will maintain joint integrity and a leakage free seal.

Correspondingly, to effect the proper sealing engagement, it is desired that the sealing rings 15 and 16 be formed of a suitable resilient, compressible material having only a very slight change in hardness and dimensional stability over a wide temperature range and thereby avoiding brittleness cracking.

It is preferred that the material of the sealing rings 15 and 16 have a low compression set without cold flow under pressure; good seal to the pipe sections 2 and 3 under repeated temperature cycles, excellent resistance to acids, alkalis, solvents, sewer gas, microorganisms and root penetration; and resistance to leakage from both within and outside the coupling 1. It is, therefore, preferred that the sealing rings 15 and 16 of the plain end pipe coupling 1 be formed of a suitable resilient elastomeric material with a Shore A durometer value of 35 to 80 and particularly good seal to the pipe ends in spite of repeated temperature cycles varying over a wide range.

Connecting the illustrated plain end pipe coupling 1 with the pipe ends 2 and 3 is extremely fast and simple and requires only cleaning of the exposed surfaces, frictionally inserting one of the pipe ends into the sleeve portion 4, as for example, pipe end 2, until the respective end thereof seats against the annular rib 25 and then frictionally inserting the other pipe end 3 in the other end of the sleeve member 4 and into abutting engagement with the annular rib 25. With this completed, the pipe ends 2 and 3 are sealingly connected and only the plastic portions of the coupling 1 and the pipes are exposed to the action of earth elements and the like.

The coupling 1 can be installed onto the first pipe end either at the pipe manufacturing plant or in the field. When installed at the manufacturing plant, the coupling is shipped together with the pipe without any substantial tendency to become lost or separated during transit. The ridges 30 retain the sleeve member 4 centered on the pipe end and prevent cocking or misalignment during shipment and handling, thereby reducing the need for field adjustment prior to further fitting operations.

**Claims**

1. A pipe coupling for use with adjacent pipe ends (2, 3) of a particular diameter, said coupling comprising a generally cylindrical sleeve (4) formed of a semi-elastic synthetic resin material, adapted to overlie the adjacent pipe ends, with an inwardly extending integral annular rib (25) in its longitudinal mid-portion, the rib dividing the coupling into two sections, each having an inner portion (27, 28), adjacent the annular rib and an outer enlarged diameter portion (12, 13) in which a resilient sealing ring (15, 16) is located, characterized in that circumferentially spaced, integral projections (30), extend generally longitudinally of the coupling, project inwardly from the respective inner portions (27, 28) and have inner surfaces located radially inwardly of a cylindrical surface of said particular diameter to grip and support a pipe end of said diameter and in that the inner portions (27, 28) are deformable to accommodate outward forces applied to the projections as the pipe ends are received therein.

2. A pipe coupling according to claim 1, characterised in that the projections (30) are in the form of longitudinally extending ridges.

3. A pipe coupling according to claim 2, characterised in that said longitudinally extending ridges are V-shaped in cross-section, having inclined side portions (31, 32) extending inwardly from the sleeve portions (27, 28) and meeting in an inner apex line (33).

4. A pipe coupling according to claim 2 or 3, characterised in that said ridges extend from the annular rib to the respective enlarged diameter outer portion.

5. A pipe coupling according to any preceding claim, characterised in that the sealing rings (15, 16) are retained in the enlarged end portions (12, 13) by end caps (20, 21) of annular U-shaped cross-section, the ends (14) of the end portions fitting into the U.

6. A pipe coupling according to any preceding claim, characterised in that the sleeve is formed of a semi-elastically stretchable thermoplastic synthetic resinous material having a modulus of elasticity in the range of 3535 to 141400 kilograms per square centimetre and a tensile strength in the range of 210 to 565 kilograms per square centimetre.

**Revendications**

1. Raccord de tuyau propre à etre utilisé pour des extrémités (2, 3) adjacentes de deux tuyaux d'un diamètre prédéterminé, ledit raccord comprenant un manchon (4) sensiblement cylindrique en matériau semi-elastique à base de résine synthetique, adapté pour recouvrir les extrémités adjacentes des tuyaux, avec une nervure (25) annulaire monobloc faisant saillie vers l'intérieur dans sa partie médiane, au point de vue longitudinal, la nervure divisant le raccord en deux zones ayant chacune une partie interne (27, 28) adjacente à la nervure annulaire, et une partie externe (12, 13) de plus grand diamètre, dans laquelle est disposé un joint annulaire elastique, caractérisé en ce que des saillies monobloc (30) espacées circulairement s'étendent sensiblement longitudinalement par rapport au raccord, font saillie vers l'intérieur à partir des parties internes (27, 28) respectives et présentent des surfaces internes disposées radialement à l'intérieur d'une surface cylindrique ayant ledit diamètre prédéterminé, de manière à serrer et supporter une extrémité de tuyau dudit diamètre prédéterminé, et en ce que les parties internes (27, 28) sont déformables pour s'adapter au forces extérieures appliquées aux saillies quand les extrémités des tuyaux sont introduites dans le raccord.

2. Raccord de tuyau selon la revendication 1 caractérisé en ce que les saillies (30) ont la forme de crêtes s'étendant longitudinalement.

3. Raccord de tuyau selon la revendication 2 caractérisé en ce que lesdites crêtes s'étendant longitudinalement ont une section transversale en forme de V et présentent des parties latérales (31, 32) inclinées s'étendant vers l'intérieur à partir des parties (27, 28) du manchon et se rejoignant selon une ligne (33) de sommet interne.

4. Raccord de tuyau selon la revendication 2 ou la revendication 3 caractérisé en ce que lesdites crêtes s'étendent à partir de la nervure annulaire jusqu'aux parties externes respectives de plus grand diamètre.

5. Raccord de tuyau selon l'une quelconque des revendications précédentes, caractérisé en ce que les joints annulaires (15, 16) sont retenus dans les parties (12, 13) d'extrémités de plus grand diamètre par des capuchons (20, 21) d'extrémités de section transversale annulaire en forme de U, les extrémités (14) des parties d'extrémités pouvant etre insérées dans le U.

6. Raccord de tuyau selon l'une quelconque des revendications précédentes, caractérisé en ce que le manchon est en un matériau synthetique résineux thermoplastique semi-elastique extensible, ayant un module d'elasticité compris entre 3535 et 141400 kg/cm² et une resistance à la traction comprise entre 210 et 565 kg/cm².

**Patentansprüche**

1. Rohrkupplung für die Verwendung bei benachbarten Enden (2, 3) von Rohren eines bestimmten Durchmessers, wobei die Kupplung für eine Überdeckung der benachbarten Rohrenden eine im wesentlichen zylindrische Manschette (4) aus einem halbelastischen Kunststoffmaterial und mit einer einstückig angeformten, sich nach innen erstreckenden Ringrippe (25) in ihrem mittleren Längsbereich aufweist, welche die Kupplung in zwei Abschnitte unterteilt, die je einen inneren Teilabschnitt (27, 28) und einen äusseren Teilabschnitt (12, 13) grösseren Durchmessers aufweisen, in dem ein elastischer Dichtring (15, 16) angeordnet ist, dadurch gekennzeichnet, das in Umfangsrichtung auf Abstand befindliche, einstückig angeformte Vorsprünge (30) sich im wesentlichen in Längsrichtung der Kupplung erstrecken, nach innen von den jeweiligen inneren Abschnitten (27, 28) vorstehen und radial innerhalb einer Zylinderfläche mit dem bestimmten Durchmesser liegende Innenflächen zum Erfassen und Abstützen eines Rohrendes mit diesem Durchmesser aufweisen und dass die inneren Abschnitte (27, 28) zur Aufnahme von aussen auf die Vorsprünge beim Einbringen der Rohrenden einwirkenden Kräften verformbar sind.

2. Rohrkupplung nach Anspruch 1, dadurch gekennzeichnet, dass die Vorsprünge (30) die Form von sich in Längsrichtung erstreckenden dachfirstartigen Rippen aufweisen.

3. Rohrkupplung nach Anspruch 2, dadurch gekennzeichnet, dass die Rippen im Querschnitt V-fömig ausgebildet sind und sich von den Manschetteilen (27, 28) nach innen erstreckende geneigte Seitenteile (31, 32) aufweisen, die einander in einer inneren Scheitellinie (33) treffen.

4. Rohrkupplung nach Anspruch 2 oder 3, dadurch gekennzeichnet, dass die Rippen sich von der Ringrippe bis zum jeweiligen Aussenteil mit vergrössertem Durchmesser erstrecken.

5. Rohrkupplung nach einem der vorangehenden Ansprüche dadurch gekennzeichnet, dass die Dichtinge (15, 16) in den vergrösserten Endteilen (12, 13) durch Endkappen (20, 21) mit ringförmigen V-förmigen Querschnitt gehalten sind, wobei die Enden (14) der Endteile in das V passen.

6. Rohrkupplung nach einem der vorangehenden Ansprüche, dadurch gekennzeichnet, dass die Manschette (1) aus einem halbelastisch dehnbaren thermoplastischen Kunstharzmaterial mit einem Elastizitätsmodul im Bereich von 3.535 bis 14.140 kg/cm² und einer Zugfestigkeit im Bereich von 210 bis 565 kg/cm² besteht.

*Fig.1*

*Fig.2*

0 002 118

Fig.3

Fig.4

Fig.5